# EUROPEAN PATENT SPECIFICATION

(11) **EP 3 086 593 B1**
(45) Date of publication and mention of the grant of the patent: **11.09.2019**
(21) Application number: 15382193.9
(22) Date of filing: 20.04.2015
(51) Int. Cl.: H04W 24/08, H04L 29/06, H04L 12/26

(54) **NETWORK ENTITY AND METHOD FOR MONITORING AN IMS-BASED SERVICE**
NETZWERKEINHEIT UND VERFAHREN ZUR ÜBERWACHUNG EINES IMS-BASIERTEN DIENSTES
ENTITÉ DE RÉSEAU ET PROCÉDÉ PERMETTANT DE SURVEILLER UN SERVICE IMS

(43) Date of publication of application: 26.10.2016
(73) Proprietor: Vodafone IP Licensing Limited, The Connection Newbury Berkshire RG14 2FN (GB)
(72) Inventor: MARTÍNEZ PEREA, Rogelio, 28042 Madrid (ES)
(74) Representative: Boult Wade Tennant LLP

(56) References cited:
- EP-A1- 2 247 031
- "3rd Generation Partnership Project; Technical Specification Group Services and System Aspects; Telecommunication management; Subscriber and equipment trace; Trace control and configuration management (Release 12)", 3GPP STANDARD; 3GPP TS 32.422, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V12.0.0, 20 December 2013 (2013-12-20), pages 1-134, XP050729229, [retrieved on 2013-12-20]
- "Lawful Interception (LI); Interception domain Architecture for IP networks", ETSI DRAFT; 12LITD017R1_DTR LI-00025 V013 ARCHITECTURE FOR IP NETWORKS, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V0.1.3, 11 May 2006 (2006-05-11), pages 1-52, XP014073788, [retrieved on 2006-05-11]
- SA3-LI(ZTE CORPORATION): "IMS lawful interception solution based on media re-routing", 3GPP DRAFT; SA3LI07_043_IMS_LAWFUL_INTERCEPTION_SOLUTI ON_BASED_ON_RE-ROUTING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. Riga; 20070414, 14 April 2007 (2007-04-14), XP050282042, [retrieved on 2007-04-14]

## Description

### TECHNICAL FIELD

The present invention lies within the telecommunications sector and, especially, relates to IP Multimedia Subsystem (IMS) network entities and services thereof.

### BACKGROUND OF THE INVENTION

The IP Multimedia Subsystem or IP Multimedia Core Network Subsystem (IMS) is an architectural framework for delivering IP based multimedia services: file transfer, video, voice, and for example, conference calls.

The delivery of IMS-based services, of which VoLTE (Voice over LTE) is a key example, currently has a lot of challenges with regards to being able to properly diagnose and solve problems of the service.

New IMS technologies are complex, and new IMS services (like VoLTE) require complex software in the handsets that needs to interact with many network elements, such as: SBC (Session Border Controller), PCSCF (Proxy Call Session Control Function), ICSCF (Interrogating Call Session Control Function), SCSCF (Serving Call Session Control Function), HSS (Home Subscriber Server), AS (Application Server), MGCF (Media Gateway Control Function), MRF (Media Resource Function), PCRF (Policy and Charging Rules Function), etc.

These are relatively new technologies and the software running in the different network elements is often prone to errors that are very difficult to troubleshoot.

Having the right tools that allow engineers to properly monitor the traffic in different elements of the network in real time is of key importance for the successful delivery of these IMS-based projects, as it can clearly reduce their time-to-market while improving the quality of the delivery.

The monitoring tools currently available for this purpose are typically based on expensive networks of passive probes that need to be deployed in all interfaces across which all the traffic flows. This implies processing massive amounts of data (all traffic that traverses those passive probes in the network). These are very expensive, complex, not scalable solutions that require the introduction of large architectures of hardware elements to perform the monitoring.

Thus, there is a need of a solution which provides monitoring capabilities without having to physically wire the network to be monitored.

3GPP Specification TS 32.422 Version 12.0.0, December 2013 describes the 3GPP standards for control and configuration of the trace, minimisation of drive test and radio link failure reporting functionality at element managers, network entities and user equipments. Trace activation is initiated from the core network element manager (EM) only.

EP 2247031 describes an implementation method, system and device for IMS monitoring. EP 2247031 allocates media anchor points to communication parties, and causes the copying of communication content sent through the media anchor points.

### DESCRIPTION OF THE INVENTION

It is therefore an object of the invention to provide a method for real-time monitoring an IMS-based service from a mobile device.

According to an aspect of the present invention, there is provided a network entity according to claim 1. According to a further aspect of the present invention, there is provided a method for monitoring an IMS based service according to claim 12. According to a further aspect of the present invention, there is provided a computer program according to claim 13.

In an illustrative example, the network entity belongs to an IMS network, said network entity being for monitoring an IMS based service provided to a user device associated with an IMS identity. The network entity, which preferably is an application server, comprises:
a receiving module configured to receive a request from a device related to monitoring the IMS-based service, the request containing a set of parameters including at least the IMS identity and at least an identity of an interface of the IMS network to be monitored;
a control module configured to cause the IMS identity to be provisioned to at least a second network entity of the IMS network in order to enable any signalling traffic associated to the IMS identity to be routed towards the network entity;
a proxy server configured to receive the monitored signalling traffic of the IMS-based service and filter the monitored signalling traffic according to the set of parameters included in the request;
a transmitting module configured to send the filtered monitored signalling traffic to the device.

The device sending the request to the network entity may be any device with computing and connection capabilities, such as a computer, a smartphone or a tablet.

The network entity is preferably an application server, preferably an IMS application server, and the proxy server is preferably a SIP proxy server. The IMS network is preferably that of a mobile operator.

The request is preferably contained in a first type of application message which further comprises an indication of whether monitoring of the IMS-based service is to be activated or to be deactivated. This first type of application message may also include parameters
characterising the IMS-based service to be monitored in the interface of the IMS network to be monitored.

The filtered monitored signalling traffic is preferably contained in a second type of application message which further comprise the identity of the interface to which the filtered monitored signalling traffic pertains. The second type of application message may also further include an indication as to whether the filtered monitored signalling traffic is downlink traffic or uplink traffic. This second type of application message may also further include a set of parameters characterizing the IMS-based service to which the filtered monitored traffic pertains.

The control module preferably comprises a translating module for translating the request into a provisioning instruction based on network topology information of the IMS network contained in the network entity.

The request and the filtered monitored signalling traffic may be sent using application messages. These application messages can be transferred by using an IMS connection which preferably uses SIP protocol, and are preferably encapsulated in a body of a SIP MESSAGE request. The application messages can also be transferred by using a Websocket protocol or by using a HTTP/HTTP PUSH/COMET protocol.

Another exemplary aspect relates to a method for monitoring an IMS based service provided to a user device associated with an IMS identity, the IMS-based service being active in an IMS network (preferably that of a mobile operator). The method comprises:
i) receiving from a device a request to monitor the IMS-based service at a network entity, the request containing a set of parameters including at least the IMS identity and at least an identity of an interface of the IMS network to be monitored;
ii) causing the IMS identity to be provisioned to at least a second network entity of the IMS network in order to enable any signalling traffic associated to the IMS identity to be routed towards the network entity;
iii) configuring a proxy server in the network entity to receive the monitored signalling traffic of the IMS-based service and filter the monitored signalling traffic according to the set of parameters included in the request; and,
iv) receiving and filtering the monitored signalling traffic at the SIP proxy in the network entity; and
v) sending the filtered monitored signalling traffic to the device.

A further exemplary aspect refers to a device comprising at least one processor and at least one memory including computer program code, the computer program code configured to, with the at least one processor, cause the device to perform at least the following:
- establishing an application connection with a network entity of an IMS network (preferably that of a mobile operator) for exchanging application messages;
- sending a request to the network entity related to monitoring an IMS-based service provided to a user device associated with an IMS identity, the request containing a set of parameters including at least the IMS identity and at least an identity of an interface of the IMS network to be monitored;
- receiving monitored signalling traffic from the network entity, said monitored signalling traffic being associated with the IMS-based service and filtered according to the set of parameters included in the request; and,
- displaying the monitored signalling traffic at the device.

This device may be any device with computing and connection capabilities, such as a computer connected to a server or any standalone computing device such as a smartphone, a tablet or a portable device.

It is possible that the device requesting the monitoring is the same as the user device where the IMS-based service runs so that the monitoring device requests to monitor its own IMS traffic.

The invention further refers to a computer program comprising computer program code adapted to perform the steps of the method as previously defined, when said program is run on a computer, a digital signal processor, a field-programmable gate array, an application-specific integrated circuit, a micro-processor, a micro-controller, or any other form of programmable hardware.

The network entity and method for monitoring of the present invention provide a solution which meets the following key functional and non-functional requirements, which are not met by the available solutions:
- It permits real-time monitoring of signalling traffic in the network from the device (or monitoring device), such as a smartphone.
- It permits real-time setting of the IMS identities to be monitored from the monitoring device.
- It permits simultaneous tracing of various network interfaces in the monitoring device.
- It is fully based on operator-controlled technologies, taking advantage of the already existing operator infrastructure and network features.
- Scaling of the Network infrastructure is based on the number of IMS identities to monitor, instead of based on total traffic load. This provides large cost reduction.

Thus, the present invention enables to monitor in real time the signalling traffic generated by or targeted at the IMS-based service. Additionally, by setting the specific interface or interfaces where the IMS-based service is to be monitored, it enables to selectively route the signalling traffic subject to monitoring.

Additional advantages and features of the invention will become apparent from the detailed description that follows and will be particularly pointed out in the appended claims.

### BRIEF DESCRIPTION OF THE DRAWINGS

To complete the description and in order to provide for a better understanding of the invention, a set of drawings is provided. These drawings form an integral part of the description and illustrate an embodiment of the invention, which should not be interpreted as restricting the scope of the invention, but just as an example of how the invention can be carried out.
Figure 1 shows a block diagram of the system architecture for monitoring an IMS-based service, according to a preferred embodiment of the invention.
Figure 2 shows a block diagram of the Application Server, its interfaces, the application messages and its internal components, according to a preferred embodiment.

### DESCRIPTION OF A WAY OF CARRYING OUT THE INVENTION

The following description is not to be taken in a limiting sense but is given solely for the purpose of describing the broad principles of the invention.

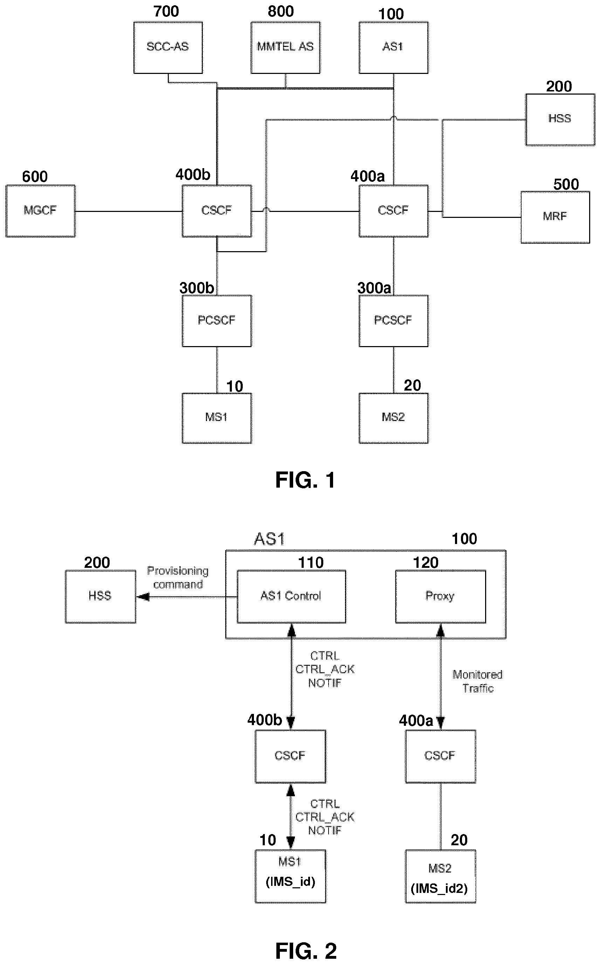

Figure 1 shows a block diagram of the system architecture for monitoring an IMS-based service according to a preferred embodiment of the invention. It is a simplified diagram that shows some of the key elements in the architecture.

Figure 2 shows a block diagram of the system architecture for monitoring an IMS-based service, more focused on the application server 100, in order to show its interfaces, the name of the application messages and the application server internal components.

As explained above, for engineers working for the network provider (e.g., where the provider is a mobile operator) it is important to be able to monitor this VoLTE service in order to properly diagnose and solve problems of the service.

For this purpose, the invention provides an application server AS1 100 in an IMS network which, upon receiving a request to monitor the signalling traffic generated by an IMS service running on a mobile device, configures the pertinent network elements as explained below so as to direct the corresponding signalling traffic to the device who has sent the request. This request is sent by a monitoring application installed in the device, a smartphone MS1 10 or in any other device with computing and connecting capabilities, such as a tablet.

The application server AS1 100 and the monitoring application installed in the smartphone MS1 10 of the user who wishes to monitor the IMS service (also called monitoring user) exchange application messages over an IMS connection established between them as will be explained below.

Next, an example is given of how an IMS-based service -such as VoLTE- can be monitored with the method of the present invention.

This VoLTE service is running on a mobile device MS2 20 registered in the IMS network with an IMS identity IMS_id2.

In order to offer the VoLTE service to the mobile device 20, the IMS network comprises a number of network elements that need to be in place (as shown in Figure 1):
- an LTE access network (eUTRAN) comprising a number of radio base stations (eNodeB), not shown in Figure 1;
- a number of elements such as: HSS 200, PCSCF 300a, ICSCF, SCSCF, BGCF (Border Gateway Control Function), MRF 500, MGCF (Media Gateway Control Function) 600, SCC-AS (Service Centralization and Continuity Application Server) 700, MMTel AS (Multimedia Telephony Application Server) 800.

Figure 1 is a simplified diagram that shows some of these elements of the IMS network architecture. For simplicity reasons, only the CSCF 400a represents both the ICSCF and the SCSCF.

The monitoring application is installed in the smartphone MS1 10 of the monitoring user who wishes to monitor that VoLTE service running in another smartphone MS2 20. It is also possible that the VoLTE service is running on the engineer's smartphone MS1 where the monitoring application resides.

When the monitoring application is launched in the smartphone MS1 10, it attempts to register in the IMS network. For that purpose it uses a monitoring IMS identity IMS_id. The monitoring application builds a SIP REGISTER message such that:
- The To header in the message equals to the monitoring IMS identity IMS_id.
- The From header in the message equals to the monitoring IMS identity IMS_id.
- The Request URI in the message equals to an URI representing the domain name of the IMS network which is configured in the application.
- The Route header in the message equals to the URI of the PCSCF 300b in the IMS network to be used by the monitoring application IMS_id. The PCSCF address might be obtained through a variety of mechanisms. For example, the monitoring application might have a preconfigured PCSCF name and then use DNS name resolution procedures in order to determine the actual transport, IP and port parameters.

Once this SIP REGISTER message has been built by the monitoring application, it sends it to the corresponding PCSCF address (as determined by the Route header in the message above).

The PCSCF 300b further routes the REGISTER message to the ICSCF (as indicated before, not specifically shown in the Figures, but part of the CSCF 400b). The ICSCF queries the HSS 200 in order to determine which SCSCF (again not shown in the Figures, but part of the CSCF 400b) is to be assigned to the monitoring IMS identity IMS_id. The ICSCF then routes the REGISTER message to the SCSCF.

After receiving the REGISTER message, the SCSCF requests that the monitoring IMS identity IMS_id authenticates itself. Once the authentication process is successful, the SCSCF registers the monitoring IMS identity IMS_id.

The SCSCF informs the HSS 200 that the monitoring IMS identity IMS_id has successfully registered and downloads the monitoring IMS identity profile in the HSS 200.

From this moment, the IMS identity representing the monitoring application is registered in the IMS network and the monitoring application can use IMS mechanisms in order to communicate with the application server AS1 100 by using application messages.

The monitoring application then sends a request to the application server AS1 using a CTRL application message using the SIP protocol. This CTRL application message additionally contains the following parameters, which are coded as text and embedded into the body of a SIP MESSAGE:
- Name of the application message 'CTRL', indicating it is a control message.
- An activation flag: a Boolean value indicating whether the order is for activating (YES) or for deactivating (NO) the monitoring.
- A list of the IMS identities to be monitored. Each identity is expressed as an IMPU (IMS Public User Identity).
- For each IMS identity, a number of additional parameters characterising the monitoring session are specified:
   - List of interface identities where the user (the engineer in this case) wishes the monitoring to take place.
   - List of parameters further characterising the service to be monitored in the previous interfaces (IMS Communication Service Identifier, Feature Tags, etc.)

So when the monitoring user of the monitoring application decides to activate monitoring any specific IMS service, the monitoring user has to introduce in the monitoring application those parameters characterizing the monitoring session: the IMS identity or identities associated to monitor, the name of the service or services to be monitored and a list of interfaces where monitoring needs to take place.

In the present example, the monitoring user wishes to monitor the VoLTE service associated to the IMS identity IMS_id2 that runs in the smartphone MS2 20. And the monitoring is to take place on the following two interfaces: the incoming and outgoing interfaces to and from the MMTEL AS 800.

A possible way of coding the above information is by using XML. An example of such a file could be:

```
 <?xml version="1.0"encoding="UTF-8"?>
 <monitoring_control_protocol version="1.0">
 <message type="CTRL"/>
 <activation_flag type="yes"/>
 <monitored_identities>
 <identity id="612 345 678">
      <monitored_interfaces>
             <interface id="1" name="MMTEL_incoming"/>
             <interface id="2" name="MMTEL_outgoing"/>
      </monitored_interfaces>
      <monitored_service>
             <service id="1" name="voice"/>
             <service id="2" name="video"/>
      </monitored_service>
      </identity>
      </monitored_identities>
      </monitoring_control_protocol
      </xml>
```

The monitoring application then:
- Includes the previous XML file (or coded text) into the body of a SIP MESSAGE.
- Sets the Request-URI of the SIP MESSAGE to the value of the SIP URI of the application server AS1, which is configured in the monitoring application.
- Sets the Route header to the SIP URI of the PCSCF 300b which acts as the entry point in the IMS network.

The SIP MESSAGE is then routed to the PCSCF 300b. Upon receiving the message, the PCSCF routes it to the SCSCF assigned to the monitoring IMS identity IMS_id that was stored during the IMS registration process.

When the SCSCF receives the message it uses the Request URI in order to route the message towards the application server AS1 100.

When the message is received at the application server AS1, a control module 110 in the application server AS1 processes the request in three steps:
First, it authorizes and validates the request. For this purpose the application server AS1 makes several checks:
- It checks that the syntax of the application message is correct; otherwise the message is rejected with a SIP response code 400 "Bad Request".
- It checks that the monitoring user identity IMS_id is allowed to request monitoring information for the IMS identities (IMS_id2 in this case) included in the request. If not allowed the application server AS1 sends back a SIP response code 403 "Forbidden".
- It checks that the monitoring user identity IMS_id is allowed to request monitoring information for the IMS services included in the request. If not allowed the application server AS1 sends back a SIP response code 403 "Forbidden".

Secondly, the application server AS1 examines internal network topology configuration (previously stored in the application server AS1 or to which the application server has access to), and based on it and on the parameters contained in the incoming request it prepares a provisioning instruction towards the HSS 200.

The network topology configuration is stored in a 'Network Topology Configuration' file. The Network Topology Configuration file is specific for each particular mobile operator and it contains information about the different network elements contained in the network and the interfaces amongst them. In particular, for each interface, it includes information about transport protocols, IP addresses and transport ports. Each interface has an identity, which in the present case is used to refer to it in the application messages exchanged between the monitoring application and the application Server AS1.

After this check is performed the application server AS1 knows the mapping between the interface name specified in the CTRL message and the real parameters of such interface in the network: transport protocol (UDP/TCP/SCTP), IP address and transport port. With these pieces of information, the application server prepares a provisioning command towards the HSS.

The provisioning command assigns a service profile to the monitored IMS identity IMS_id2, the service profile including a configuration of initial filtering criteria (iFC), trigger point (TP) and service point triggers (SPT) so as to allow the SCSCF to route the target traffic towards the application server AS1 for monitoring purposes.

In this particular example, the two interfaces indicated in the request are the incoming and outgoing interfaces to the MMTEL AS 800. This is the type of configuration needed in case the monitoring user wants to monitor how the MMTEL application server is behaving. Both the incoming signalling to and the outgoing signalling from the MMTEL AS 800 are monitored, thereby allowing for troubleshooting of this specific node.

Once the provisioning command is prepared, the application server sends it to the HSS. Upon receiving confirmation that the provisioning command was successfully executed by the HSS, the application server proceeds with the third step.

In the third processing step, the application server AS1 creates or updates data structures within the application server AS1 itself in order to be able to track the monitoring requests and associate the target IMS identities (IMS_id2 in this example) with the monitoring IMS identities that requested the monitoring, and to be prepared for receiving the monitored traffic. This data structure is referred to as the Monitoring Mapping Table (MMT). The Monitoring Mapping Table contains the list of IMS identity or identities that need to be monitored, and for each of them it contains the list of Monitoring IMS identity or identities that requested the monitoring. Several monitoring IMS identities can request monitoring for the same IMS Identity. Likewise, several IMS Identities can be monitored by the same monitoring IMS identity.

Once this third processing step is finalised, the application server AS1 responds back to the monitoring application, acknowledging that the monitoring request was properly processed.

This is done by using a specific application message called CTRL_ACK which is also encapsulated in the body of a SIP MESSAGE sent by the application Server AS1 to the monitoring application MA1.

An example of an XML file representing such message is:

```
 <?xml version="1.0"encoding="UTF-8"?>
 <monitoring_control_protocol version="1.0">
 <message type="CTRL_ACK"/>
 <response code="200" comment="OK" />
 </monitoring_control_protocol
 </xml>
```

When the provisioning request for the HSS has been fulfilled, the HSS 200 pushes the service profile to the SCSCF where the IMS identity IMS_id2 is registered (not shown, but part of CSCF 400a). Once the SCSCF has received this information it is then ready for starting the monitoring.

When the IMS Identity IMS_id2 generates some traffic, for example due to an originating or terminating call, the SCSCF assigned to the IMS identity IMS_id2 executes the triggers as specified by the service profile pushed by the HSS 200. In this particular case, the service profile indicates that there is a need to trigger the application server AS1 100 both prior to the MMTEL AS 800 and after the MMTEL AS 800. The SCSCF executes the triggers and routes the signalling traffic towards the application server AS1 100.

When the application server AS1 receives the signalling traffic, it acts as a stateful SIP proxy 120. The SIP proxy 120 acts in a transparent way in the sense that it does not modify the Request-URI, the body of the message nor other key parameters that qualify the request from the IMS identity IMS_id2. As per normal SIP proxy operation, the Via, Route and Record-Route header may need to be modified in order to enable the routing of requests and responses to the SCSCF.

Therefore, upon receiving the signalling messages, the application server:
1- Sends the signalling message back to the SCSCF.
2- Identifies which is the interface from which this message arrived. This is done based on the IP, port and "call" Request-URI parameter.
3- Identifies to which service the received signalling message pertains to. This is done based on the feature tags present in the Contact/Accept-Contact or in the m-lines at SDP level. For messages different than the INVITE, the service corresponds to the one for the INVITE that originated the session.
4- Identifies what is the direction of the message, whether it is uplink or downlink traffic.
5- Checks the Monitoring Mapping Table (MMT) in order to check which monitoring IMS identities need to be informed about this message.

Once the previous steps have been executed, the application server AS1 100 builds an application message to be sent to the monitoring application.

The message is encapsulated using text in the body of a SIP MESSAGE and it contains the following elements:
- Name of the application message. In this case it is 'NOTIF', indicating this is a message including a monitored traffic message.
- Identity of the interface to which the monitored signalling traffic pertains.
- Identity of the service the monitored traffic pertains to.
- Direction of the monitored signalling traffic: downlink or uplink.
- Content of the monitored traffic message itself.

These NOTIF message may also contain a set of parameters characterizing the service to which the monitored signalling traffic pertains.

This information could be coded in XML as follows:

```
 <?xml version="1.0"encoding="UTF-8"?>
 <monitoring_control_protocol version="1.0">
 <message type="NOTIF"/>
 <identity id="612 345 678">
      < interfaces id="1" name="MMTEL_incoming"/>
      <direction type="uplink"/>
      <service id="1" name="voice"/ >
      <message>
             Textual content of the monitored message.
      </message>
      </identity>
      </monitoring_control_protocol
      </xml>
```

The application server AS1 places the application message in the body of a SIP MESSAGE request. The application server AS1 places the SIP URI of the Monitoring IMS Identity (as obtained from the Monitoring Mapping Table) as the Request URI of the SIP MESSAGE and sets the Route header to the SIP URI of the SCSCF where the Monitoring IMS Identity is registered (the SCSCF in CSCF 400b). The application server AS1 100 thus generates an Out-Of-The-Blue request towards the monitoring application in the smartphone MS1 10.

The SIP MESSAGE request reaches the SCSCF, which routes it to the corresponding PCSCF 300b. The PCSCF then routes the request directly to the monitoring IMS identity IMS_id.

Upon receiving the SIP MESSAGE containing a NOTIF application message, the monitoring application interprets it and displays its information in the screen of the smartphone MS1 10, in a way that provides the best user experience for the monitoring user.

The monitoring application does not need to be running in the foreground. As a matter of fact it is always executing a background process that is listening for new incoming application messages. When these are received, a notification is generated for the user (in the way of an audible tone or vibration) so that the monitoring user can then be directed to the monitoring application screen where the received information is properly displayed.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

Please note that in this text, the term "comprises" and its derivations (such as "comprising", etc.) should not be understood in an excluding or limiting sense (such as "consists of"), that is, these terms should not be interpreted as excluding the possibility that what is described and defined may include further elements, steps, etc.

In the context of the present invention, the term "approximately" and terms of its family (such as "approximate", etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about" and "around" and "substantially".

## Claims

1. A network entity (100) belonging to an IMS network, the network entity (100) being for monitoring an IMS-based service provided to a first user device (20) associated with a first IMS identity, **characterized in that** it comprises:
- a receiving module configured to receive from a second user device (10) a request related to monitoring the IMS-based service provided to the first user device (20), the request containing a set of parameters including at least the first IMS identity and at least an identity of an interface of the IMS network to be monitored;
- a control module (110) configured to send to a second network entity (200) a provisioning command to send a service profile to a Serving Call Session Control Function node, SCSCF (400a) where the first IMS identity is registered, the service profile including a configuration of initial filtering criteria, trigger point and service point trigger so as to allow the SCSCF to route signalling traffic associated with the first IMS identity towards the network entity (100);
- a proxy server (120) configured to receive from the SCSCF (400a) the signalling traffic of the IMS-based service associated with the first IMS identity, collect information relating to the signalling traffic according to the set of parameters included in the request, and return the signalling traffic to the SCSCF (400a) where the first IMS identity is registered;
- a transmitting module configured to send the collected information relating to the signalling traffic to the second user device (10).

2. Network entity according to claim 1, wherein the request is contained in a first type of application message, said message further comprising an indication of whether monitoring of the IMS-based service is to be activated or to be deactivated.

3. Network entity according to claim 2, wherein the first type of application message further includes parameters characterising the IMS-based service to be monitored in the interface of the IMS network to be monitored.

4. Network entity according to any of claims 1-3, wherein the collected information relating to the signalling traffic is contained in a second type of application message, said message further comprising the identity of the interface to which the signalling traffic pertains.

5. Network entity according to claim 4, wherein the second type of application message further includes an indication as to whether the signalling traffic is downlink traffic or uplink traffic.

6. Network entity according to claim 5, wherein the second type of application message further includes a set of parameters characterizing the IMS-based service to which the signalling traffic pertains.

7. Network entity according to any of claims 1-6, wherein the control module (110) comprises a translating module for translating the request into a provisioning instruction based on network topology information of the IMS network contained in the network entity.

8. Network entity according to any of claims 1-7, wherein the network entity (100) is an application server.

9. A network entity according to any one of claims 1 to 8, wherein the request and the collected information relating to the signalling traffic are sent using application messages.

10. A network entity according to claim 9, wherein the application messages are transferred by using one or more of the following:
an IMS connection;
a Websocket protocol;
a HTTP/HTTP PUSH/COMET protocol.

11. A network entity according to claim 9 or 10, wherein the application messages are encapsulated in a body of a SIP MESSAGE request.

12. A method for monitoring an IMS based service provided to a first user device (20) associated with a first IMS identity, the IMS-based service being active in an IMS network, **characterized in that** the method comprises:
i) receiving at a first network entity (100) from a second user device (10) a request to monitor the IMS-based service provided to the first user device (20), the request containing a set of parameters including at least the first IMS identity and at least an identity of an interface of the IMS network to be monitored;
ii) sending from the first network entity (100) to a second network entity (200) provisioning command to send routing instructions for signalling traffic associated with the first IMS identity,
iii) sending a service profile from the second network entity to a Serving Call Session Control Function node, SCSCF (400a) where the first IMS identity is registered, the service profile including a configuration of initial filtering criteria, trigger point and service point trigger so as to allow the SCSCF to route signalling traffic associated with the first IMS identity towards the first network entity (100);
iv) receiving at a proxy server (120) in the first network entity (100) the signalling traffic associated with the first IMS identity from the SCSCF (400a), and collecting information relating to the signalling traffic according to the set of parameters included in the request;
v) returning the signalling traffic associated with the first user device (20) from the proxy server (120) to the SCSCF (400a); and
vi) sending the collected information relating to the signalling traffic to the second user device (10).

13. A computer program comprising computer program code adapted to perform the steps of the method according to claim 12 when said program is run on a computer, a digital signal processor, a field-programmable gate array, an application-specific integrated circuit, a micro-processor, a micro-controller, or any other form of programmable hardware.

## Patentansprüche

1. Eine Netzwerkeinheit (100) eines IMS-Netzwerks, wobei die Netzwerkeinheit (100) der Überwachung eines IMS-basierten Dienstes dient, der einer einer ersten IMS-Identität zugeordneten ersten Benutzervorrichtung (20) bereitgestellt wird, **dadurch gekennzeichnet, dass** sie Folgendes umfasst:
- ein Empfangsmodul, so konfiguriert, dass es eine Anforderung im Zusammenhang mit der Überwachung des der ersten Benutzervorrichtung (20) bereitgestellten IMS-basierten Dienstes von einer zweiten Benutzervorrichtung (10) empfängt, wobei die Anforderung einen Satz Parameter beinhaltend zumindest die erste IMS-Identität und zumindest eine Identität einer Schnittstelle des zu überwachenden IMS-Netzwerks umfasst;
- ein Steuermodul (110), so konfiguriert, dass es einer zweiten Netzwerkeinheit (200) einen Bereitstellungsbefehl zum Senden eines Dienstprofils an einen Knoten einer bedienenden Rufsitzungssteuerungsfunktion (Serving Call Session Control Function, SCSCF) (400a) sendet, auf der die erste IMS-Identität registriert ist, wobei das Dienstprofil eine Konfiguration anfänglicher Filterungskriterien, einen Auslösepunkt und einen Dienstpunktauslöser beinhaltet, um zuzulassen, dass die SCSCF den der ersten IMS-Identität zugeordneten Signalisierungsverkehr hin zu der Netzwerkeinheit (100) weiterleitet;
- einen Proxyserver (120), so konfiguriert, dass er den Signalisierungsverkehr des der ersten IMS-Identität zugeordneten IMS-basierten Dienstes von der SCSCF (400a) empfängt, die Informationen im Zusammenhang mit dem Signalisierungsverkehr entsprechend dem in der Anforderung beinhalteten Satz Parameter erfasst und den Signalisierungsverkehr an die SCSCF (400a) zurücksendet, auf der die erste IMS-Identität registriert ist;
- ein Übertragungsmodul, so konfiguriert, dass es die erfassten Informationen im Zusammenhang mit dem Signalisierungsverkehr an die zweite Benutzervorrichtung (10) sendet.

2. Netzwerkeinheit nach Anspruch 1, wobei die Anforderung in einem ersten Typ von Anwendungsnachricht enthalten ist, wobei die genannte Nachricht weiter eine Angabe dazu umfasst, ob die Überwachung des IMS-basierten Dienstes zu aktivieren oder zu deaktivieren ist.

3. Netzwerkeinheit nach Anspruch 2, wobei der erste Typ von Anwendungsnachricht weiter Parameter beinhaltet, die den zu überwachenden IMS-basierten Dienst in der Schnittstelle des zu überwachenden IMS-Netzwerks kennzeichnen.

4. Netzwerkeinheit nach einem der Ansprüche 1-3, wobei die erfassten Informationen im Zusammenhang mit dem Signalisierungsverkehr in einem zweiten Typ von Anwendungsnachricht enthalten sind, wobei die genannte Nachricht weiter die Identität der Schnittstelle umfasst, zu welcher der Signalisierungsverkehr gehört.

5. Netzwerkeinheit nach Anspruch 4, wobei der zweite Typ von Anwendungsnachricht weiter eine Angabe dazu beinhaltet, ob es sich bei dem Signalisierungsverkehr um Abwärtsstreckenverkehr oder um Aufwärtsstreckenverkehr handelt.

6. Netzwerkeinheit nach Anspruch 5, wobei der zweite Typ von Anwendungsnachricht weiter einen Satz Parameter beinhaltet, die den IMS-basierten Dienst kennzeichnen, zu dem der Signalisierungsverkehr gehört.

7. Netzwerkeinheit nach einem der Ansprüche 1-6, wobei das Steuermodul (110) ein Übersetzungsmodul zur Übersetzung der Anforderung in eine Bereitstellungsanweisung basierend auf Informationen zur Netzwerktopologie des in der Netzwerkeinheit enthaltenen IMS-Netzwerks umfasst.

8. Netzwerkeinheit nach einem der Ansprüche 1-7, wobei es sich bei der Netzwerkeinheit (100) um einen Anwendungsserver handelt.

9. Eine Netzwerkeinheit nach einem der Ansprüche 1 bis 8, wobei die Anforderung und die erfassten Informationen im Zusammenhang mit dem Signalisierungsverkehr unter Verwendung von Anwendungsnachrichten gesendet werden.

10. Eine Netzwerkeinheit nach Anspruch 9, wobei die Anwendungsnachrichten unter Verwendung eines oder mehrerer der folgenden übertragen werden:
einer IMS-Verbindung;
eines Websocket-Protokolls;
eines HTTP/HTTP PUSH/COMET-Protokolls.

11. Eine Netzwerkeinheit nach Anspruch 9 oder 10, wobei die Anwendungsnachrichten in einem Hauptteil einer SIP MESSAGE-Anforderung eingeschlossen sind.

12. Ein Verfahren zur Überwachung eines IMS-basierten Dienstes, der einer einer ersten IMS-Identität zugeordneten ersten Benutzervorrichtung (20) bereitgestellt wird, wobei der IMS-basierte Dienst in einem IMS-Netzwerk aktiv ist, **dadurch gekennzeichnet, dass** das Verfahren Folgendes umfasst:
i) Empfangen, an einer ersten Netzwerkeinheit (100) von einer zweiten Benutzervorrichtung (10), einer Anforderung zur Überwachung des der ersten Benutzervorrichtung (20) bereitgestellten IMS-basierten Dienstes, wobei die Anforderung einen Satz Parameter beinhaltend zumindest die erste IMS-Identität und zumindest eine Identität einer Schnittstelle des zu überwachenden IMS-Netzwerks umfasst;
ii) Senden, von der ersten Netzwerkeinheit (100) an eine zweite Netzwerkeinheit (200), eines Bereitstellungsbefehls zum Senden von Weiterleitungsanweisungen für den der ersten IMS-Identität zugeordneten Signalisierungsverkehr,
iii) Senden eines Dienstprofils von der zweiten Netzwerkeinheit an einen Knoten einer bedienenden Rufsitzungssteuerungsfunktion (Serving Call Session Control Function, SCSCF) (400a), auf der die erste IMS-Identität registriert ist, wobei das Dienstprofil eine Konfiguration anfänglicher Filterungskriterien, einen Auslösepunkt und einen Dienstpunktauslöser beinhaltet, um zuzulassen, dass die SCSCF den der ersten IMS-Identität zugeordneten Signalisierungsverkehr hin zu der ersten Netzwerkeinheit (100) weiterleitet;
iv) Empfangen, an einem Proxyserver (120) in der ersten Netzwerkeinheit (100), des der ersten IMS-Identität zugeordneten Signalisierungsverkehrs von der SCSCF (400a) und Erfassen von Informationen im Zusammenhang mit dem Signalisierungsverkehr entsprechend dem in der Anforderung beinhalteten Satz Parameter;
v) Zurücksenden des der ersten Benutzervorrichtung (20) zugeordneten Signalisierungsverkehrs von dem Proxyserver (120) an die SCSCF (400a); und
vi) Senden der erfassten Informationen im Zusammenhang mit dem Signalisierungsverkehr an die zweite Benutzervorrichtung (10).

13. Ein Computerprogramm umfassend einen Computerprogrammcode, dafür ausgelegt, die Schritte des Verfahrens nach Anspruch 12 auszuführen, wenn das genannte Programm auf einem Computer, einem digitalen Signalprozessor, einem feldprogrammierbaren Gate-Array, einer anwendungsspezifischen integrierten Schaltung, einem Mikroprozessor, einem Mikrocontroller oder einer beliebigen anderen Form von programmierbarer Hardware ausgeführt wird.

## Revendications

1. Une entité de réseau (100) appartenant à un réseau IMS, l'entité de réseau (100) étant destinée à la surveillance d'un service de type IMS fourni à un premier dispositif d'utilisateur (20) associé à une première identité IMS, **caractérisée en ce qu'**elle comprend :
- un module de réception configuré de façon à recevoir à partir d'un deuxième dispositif d'utilisateur (10) une demande relative à la surveillance du service de type IMS fourni au premier dispositif d'utilisateur (20), la demande contenant un ensemble de paramètres comprenant au moins la première identité IMS et au moins une identité d'une interface du réseau IMS à surveiller,
- un module de commande (110) configuré de façon à envoyer à une deuxième entité de réseau (200) une commande d'approvisionnement destinée à l'envoi d'un profil de service à un noeud de fonction de commande de session d'appel de desserte, SCSCF, (400a), dans lequel la première identité IMS est enregistrée, le profil de service comprenant une configuration de critères de filtrage initiaux, de point de déclenchement et de déclencheur de point de service de façon à permettre à la SCSCF d'acheminer du trafic de signalisation associé à la première identité IMS vers l'entité de réseau (100),
- un serveur mandataire (120) configuré de façon à recevoir à partir de la SCSCF (400a) le trafic de signalisation du service de type IMS associé à la première identité IMS, à recueillir des informations relatives au trafic de signalisation en fonction de l'ensemble de paramètres inclus dans la demande et à renvoyer le trafic de signalisation à la SCSCF (400a) dans laquelle la première identité IMS est enregistrée,
- un module de transmission configuré de façon à envoyer les informations relatives au trafic de signalisation recueillies au deuxième dispositif d'utilisateur (10).

2. L'entité de réseau selon la Revendication 1, où la demande est contenue dans un premier type de message d'application, ledit message contenant en outre une indication si la surveillance du service de type IMS doit être activée ou être désactivée.

3. L'entité de réseau selon la Revendication 2, où le premier type de message d'application comprend en outre des paramètres caractérisant le service de type IMS à surveiller dans l'interface du réseau IMS à surveiller.

4. L'entité de réseau selon l'une quelconque des Revendications 1 à 3, où les informations relatives au trafic de signalisation recueillies sont contenues dans un deuxième type de message d'application, ledit message contenant en outre l'identité de l'interface à laquelle le trafic de signalisation se rapporte.

5. L'entité de réseau selon la Revendication 4, où le deuxième type de message d'application comprend en outre une indication si le trafic de signalisation est un trafic en liaison descendante ou un trafic en liaison montante.

6. L'entité de réseau selon la Revendication 5, où le deuxième type de message d'application comprend en outre un ensemble de paramètres caractérisant le service de type IMS auquel le trafic de signalisation se rapporte.

7. L'entité de réseau selon l'une quelconque des Revendications 1 à 6, où le module de commande (110) comprend un module de conversion destiné à la conversion de la demande en une instruction d'approvisionnement en fonction d'informations de topologie de réseau du réseau IMS contenues dans l'entité de réseau.

8. L'entité de réseau selon l'une quelconque des Revendications 1 à 7, où l'entité de réseau (100) est un serveur d'applications.

9. Une entité de réseau selon l'une quelconque des Revendications 1 à 8, où la demande et les informations relatives au trafic de signalisation recueillies sont envoyées au moyen de messages d'application.

10. Une entité de réseau selon la Revendication 9, où les messages d'application sont transférés au moyen d'un ou plusieurs éléments parmi les suivants :
une connexion IMS,
un protocole WebSocket,
un protocole HTTP/HTTP PUSH/COMET.

11. Une entité de réseau selon la Revendication 9 ou 10, où les messages d'application sont encapsulés dans un corps d'une demande SIP MESSAGE.

12. Un procédé de surveillance d'un service de type IMS fourni à un premier dispositif d'utilisateur (20) associé à une première identité IMS, le service de type IMS étant actif dans un réseau IMS, **caractérisé en ce que** le procédé comprend :
i) la réception au niveau d'une première entité de réseau (100) à partir d'un deuxième dispositif d'utilisateur (10) d'une demande de surveillance du service de type IMS fourni au premier dispositif d'utilisateur (20), la demande contenant un ensemble de paramètres comprenant au moins la première identité IMS et au moins une identité d'une interface du réseau IMS à surveiller,
ii) l'envoi à partir de la première entité de réseau (100) à une deuxième entité de réseau (200) d'une commande d'approvisionnement destinée à l'envoi d'instructions d'acheminement destinées à un trafic de signalisation associé à la première identité IMS,
iii) l'envoi d'un profil de service à partir de la deuxième entité de réseau à un noeud de fonction de commande de session d'appel de desserte, SCSCF, (400a), dans lequel la première identité IMS est enregistrée, le profil de service comprenant une configuration de critères de filtrage initiaux, de point de déclenchement et de déclencheur de point de service de façon à permettre à la SCSCF d'acheminer le trafic de signalisation associé à la première identité IMS vers la première entité de réseau (100),
iv) la réception au niveau d'un serveur mandataire (120) dans la première entité de réseau (100) du trafic de signalisation associé à la première identité IMS à partir de la SCSCF (400a), et le recueil d'informations relatives au trafic de signalisation en fonction de l'ensemble de paramètres inclus dans la demande,
v) le renvoi du trafic de signalisation associé au premier dispositif d'utilisateur (20) à partir du serveur mandataire (120) vers la SCSCF (400a), et
vi) l'envoi des informations relatives au trafic de signalisation recueillies au deuxième dispositif d'utilisateur (10).

13. Un programme informatique contenant du code de programme informatique adapté de façon à exécuter les opérations du procédé selon la Revendication 12 lorsque ledit programme est exécuté sur un ordinateur, un processeur de signaux numériques, un réseau prédiffusé programmable par l'utilisateur, un circuit intégré spécifique à une application, un micro-processeur, un micro-contrôleur, ou toute autre forme de matériel informatique programmable.
